# EUROPEAN PATENT SPECIFICATION

(11) **EP 1 237 298 B1**
(45) Date of publication and mention of the grant of the patent: **03.09.2008**
(21) Application number: 01104878.2
(22) Date of filing: 28.02.2001
(51) Int. Cl.: H04B 7/155

(54) **Control Method for a Repeater System Having Oscillation Preventing Function and Automatic Reverse Output Disabling Function for Non-Subscriber**
Regelverfahren für ein Relaissystem mit Funktion zum Unterdrücken von Schwingungen sowie einer automatischen Abschaltfunktion des Ausgangs für Nichtteilnehmer
Méthode de commande pour un système répéteur comportant une fonction de prévention des oscillations et une fonction de mise hors service de la sortie retour pour non-abonnés

(43) Date of publication of application: 04.09.2002
(73) Proprietor: KTFreetel Co., Ltd, 135-280 Seoul (KR)
(72) Inventor: Oh, Young-Min, Induckwon Samsung Apt. 102-1705, Anyang-city, Kyungki-do (KR); Kang, Byoung-Shik, Yongin-city, Kyungki-do (KR); Cho, Hyung-Sik, Sungnam-city (KR); Choi, Wan, Seoul (KR)
(74) Representative: Lorenz, Werner

(56) References cited:
- EP-A- 0 851 606
- US-A- 3 411 088
- US-A- 5 815 795
- PATENT ABSTRACTS OF JAPAN vol. 1999, no. 02, 26 February 1999 (1999-02-26) & JP 10 313271 A (KOKUSAI ELECTRIC CO LTD;KOKUSAI DENKI ENG:KK), 24 November 1998 (1998-11-24)

## Description

### BACKGROUND OF THE INVENTION

### (a) Field of the Invention

The present invention relates to a control method for a repeater system having an oscillation preventing function.

### (b) Description of the Related Art

In general, a mobile communication system includes a base station transceiver system, a base station controller, a mobile switching center, and a mobile station.

The base station transceiver system is in communications with mobile stations in a predetermined frequency band, each mobile station having a predetermined service radius. Thus, a plurality of base station transceiver systems are properly arranged so that the service radii of the individual base station transceiver systems are overlapped, in order to extend the service area.

Although multiple base station transceiver systems cover the entire city area, there are still blanket areas, i.e., non-service areas, including underground areas of a large building, interior space of a high-rise building.

Mobile telephone subscribers can hardly have a smooth talking service in the blanket areas. Conventionally, repeater systems are installed in the blanket areas in an attempt to solve the problem in regard to the blanket areas with less expense relative to the base station transceiver systems.

Typically, several or several scores of repeater systems are connected in common to a single base station transceiver system, and the amount of noise introduced in the base station transceiver system on the reverse link increases in proportion to a rise in the number of the repeater systems connected to the base station transceiver system, thus reducing the capacity of the base station transceiver system.

The repeater systems may have self-oscillations depending on the installation place or according to circumstances. Among the self-oscillations, the forward oscillation causes no more than a failure of connection to the corresponding service area, but the reverse oscillation results in serious defects in a reception path of the base station transceiver system connected to the repeater systems.

JP 10 313 271 A discloses an abnormal oscillation detection circuit for a frequency type radio repeater. The operation of an amplifier of a channel is stopped on the occurrence of abnormal oscillation only by detecting the abnormal oscillation produced through a path due to coupling between a mobile set side antenna and a base station side antenna of the frequency selection radio repeater while distinguishing it from an access input.

### SUMMARY OF THE INVENTION

It is an object of the present invention to solve the problem and to provide a control method for a repeater system having an oscillation preventing function and an automatic reverse output disabling function, in which the reverse output of the repeater system is disabled upon detection of a non-subscriber interval in the service area or a reverse oscillation so as to prevent a drop in the capacity of a base station transceiver system and protect a reception path.

This object is achieved by claim 1.

There is provided a method for controlling a repeater system, comprising the steps of: discriminating between an oscillation signal of the repeater system, and a talking signal and an access signal, disabling a reverse output of the repeater system during oscillation of the repeater system, and after an elapse of a first time, detecting the state of power of the reverse output; disabling the reverse output of the repeater system when the power is in an oscillation state; and enabling the reverse output of the repeater system when the power not in the oscillation state and the reverse output is an access or talking signal.

The repeater system comprises: a transmitter for amplifying data received from an external base station transceiver system, converting the amplified data to a service frequency, and sending the service frequency to a mobile station in a corresponding service area; a receiver for amplifying the signal received from the mobile station and outputting the amplified signal to the base station transceiver system; and a controller for detecting the power level of the receiver, and preventing the output signal of the receiver being sent to the base station transceiver system when the power level is above a first reference value during a first time or below a second reference value during a second time.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
- FIG. 1.: is a schematic block diagram of a repeater system in accordance with an embodiment of the present invention;
- FIG. 2.: is a detailed diagram of the controller shown in FIG. 1;
- FIG. 3.: is a timing diagram showing a logic flow in a high limit check circuit of the controller;
- FIG. 4.: is a flow chart for programming the high limit logic;
- FIG. 5.: is a timing diagram showing a logic flow in a low limit check circuit of the controller; and
- FIG. 6.: is a flow chart for programming the low limit logic.

### DETAILED DESCRIPTION OF THE PREFERRED EMBODIMENTS

In the following detailed description, only the preferred embodiment of the invention has been shown and described, simply by way of illustration of the best mode contemplated by the inventor(s) of carrying out the invention. Expediently, the description will be given as to, for example, a personal communication service (PCS) system.

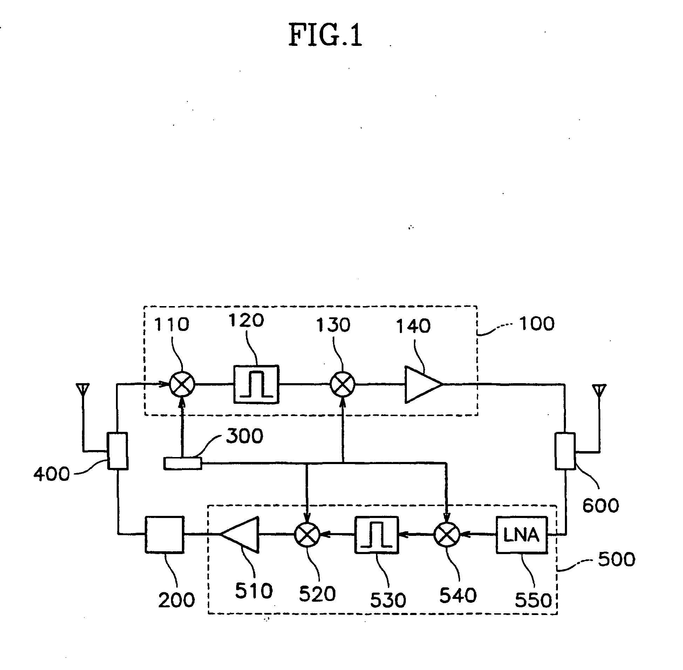

FIG. 1 is a schematic block diagram of a repeater system in accordance with an embodiment of the present invention.

Referring to FIG. 1, the repeater system according to an embodiment of the present invention includes: a first duplexer 400 for transmitting data from an external base station transceiver system on a corresponding path; a transmitter 100 for amplifying a signal received from the first duplexer 400 into a service frequency; a second duplexer 600 for transmitting the output signal of the transmitter 100 to a mobile station located in a corresponding service area in a wireless manner, and receiving a signal from the mobile station; a receiver 500 for amplifying the signal received from the second duplexer 600; and a controller 200 coupled to the output signal of the receiver 500 for detecting the power level of the receiver 500, the controller 200 preventing the output of the receiver 500 being sent to the first duplexer 400 when the detected power level is above a first reference value during a first time period or below a second reference value during a second time period.

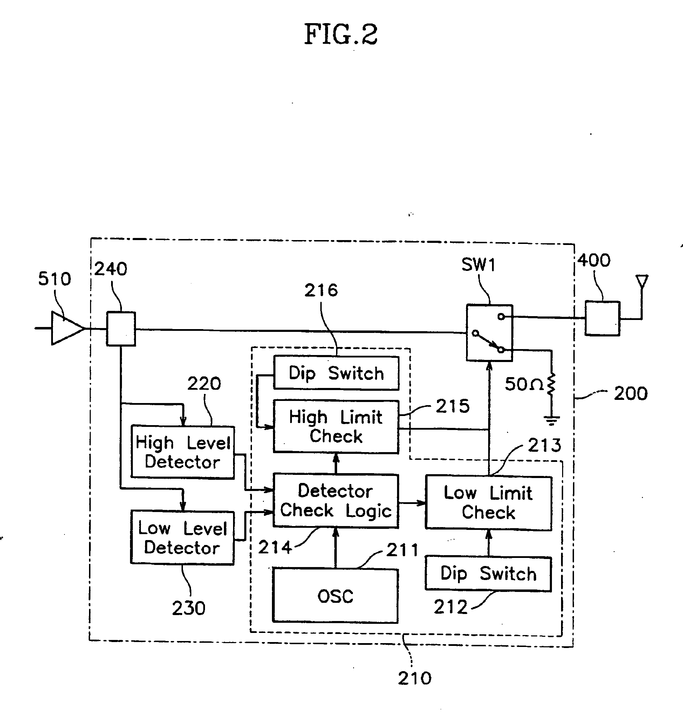

FIG. 2 is a detailed diagram of the controller 200 shown in FIG. 1.

Referring to FIG. 2, the controller 200 includes: a high level detector 220 coupled to the output of the receiver 500 for detecting a high power level of the receiver 500; a low level detector 230 coupled to the output of the receiver 500 for detecting a low power level of the receiver 500; an integrated circuit 210 for generating a control signal to prevent the output of the receiver 500 being sent to the first duplexer when the power level detected by the high level detector 220 is above the first reference value during the first time period, or when the power level detected by the low level detector 230 is below the second reference value during the second time period; and a switch SW1 for enabling or disabling transmission of the output signal of the receiver 500 to the first duplexer 400 based on the control signal of the integrated circuit 210.

The transmitter 100 includes: a first mixer 110 for converting a signal having a high frequency received from the first duplexer 400 to a signal having an intermediate frequency; a first surface acoustic wave (SAW) filter 120 for filtering the output signal of the first mixer 110 and outputting a desired signal having an intermediate frequency; a second mixer 130 for modulating the output signal of the first SAW filter 120 to a signal having a high frequency; and a first power amplifier 140 for amplifying the output signal of the second mixer 130 and outputting the amplified signal to the second duplexer 600.

The receiver 500 includes: a low-noise amplifier 550 for amplifying the signal having a high frequency received from the second duplexer 600; a third mixer 540 for modulating the output signal of the low-noise amplifier 550 into a signal having an intermediate frequency; a second SAW filter 530 for filtering the output signal of the third mixer 540 and outputting a desired signal having a high frequency; a fourth mixer 520 for modulating the output signal of the second SAW filter 530 into a signal having a high frequency; and a second power amplifier 510 for amplifying the output signal of the fourth mixer 520.

Now, a description will be given in detail as to an operation of the above-constructed repeater system in accordance with the present invention.

First, the first duplexer 400 receives an input radio signal having a high frequency of 1.8 to 1.9 MHz from a base station transceiver system. The input signal may be received at the first duplexer 400 via a wire depending on the repeater system.

The first mixer 110 converts the signal having a high frequency from the duplexer 400 to a signal having an intermediate frequency, and simultaneously, receives a signal having a frequency for intermediate frequency modulation from an oscillator 300.

The first SAW filter 120 filters the output of the first mixer 110 and outputs a signal having an intermediate frequency.

Subsequently, the second mixer 130 modulates the output signal of the first SAW filter 120 into a signal having a high frequency, and simultaneously, receives a signal having a frequency for high frequency modulation from the oscillator 300.

The first power amplifier 140 amplifies the output signal of the second mixer 130 and outputs the amplified signal to the second duplexer 600.

The second duplexer 600 sends this signal to the mobile telephone of the subscriber via an antenna. Then, the subscriber in the corresponding service area receives the signal.

The signal output from the mobile telephone of the subscriber is input to the second duplexer 600, amplified at the low-noise amplifier 550 and converted to a signal having an intermediate frequency at the third mixer 540.

The second SAW filter 530 filters the output signal of the third mixer 540 and outputs a signal having an intermediate frequency.

The fourth mixer 520 modulates the output signal of the second SAW filter 530 into a signal having a high frequency.

The signal having a high frequency is amplified at the second power amplifier 510 and sent to the base station transceiver system via the controller 200 and the first duplexer 400 in a wireless manner.

The mobile telephone gets in connection to the base station transceiver system in the above-described procedure.

If the subscriber is not located in the corresponding service area during the procedure, the second power amplifier 510 has a very low power and the power oscillates, in which case the controller 200 interrupts the output signal of the second power amplifier 510 on the reverse channel, i.e., to the first duplexer 400. The subscriber can adjust a voltage corresponding to the high and low limits using switches 212 and 216, and enables/disables both an oscillation preventing function and an automatic reverse output disabling function for non-subscriber intervals when no subscriber exists in the corresponding service area.

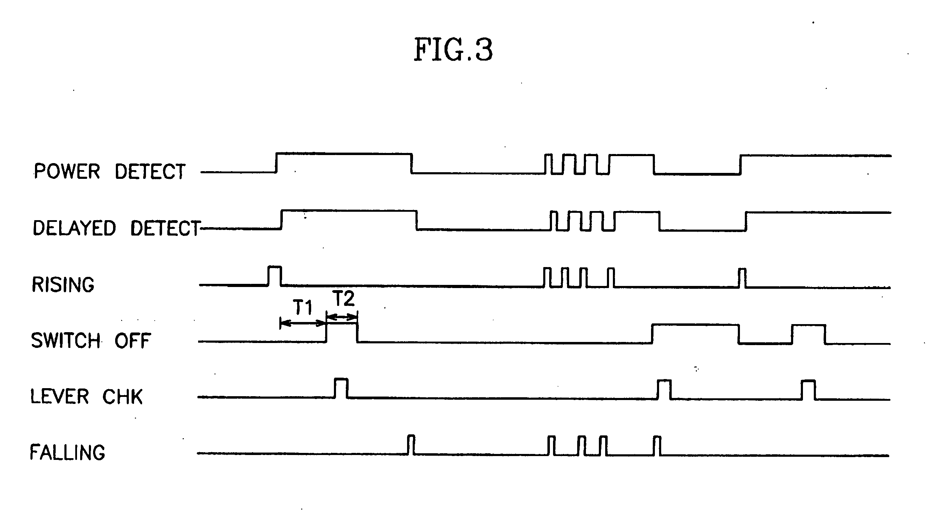

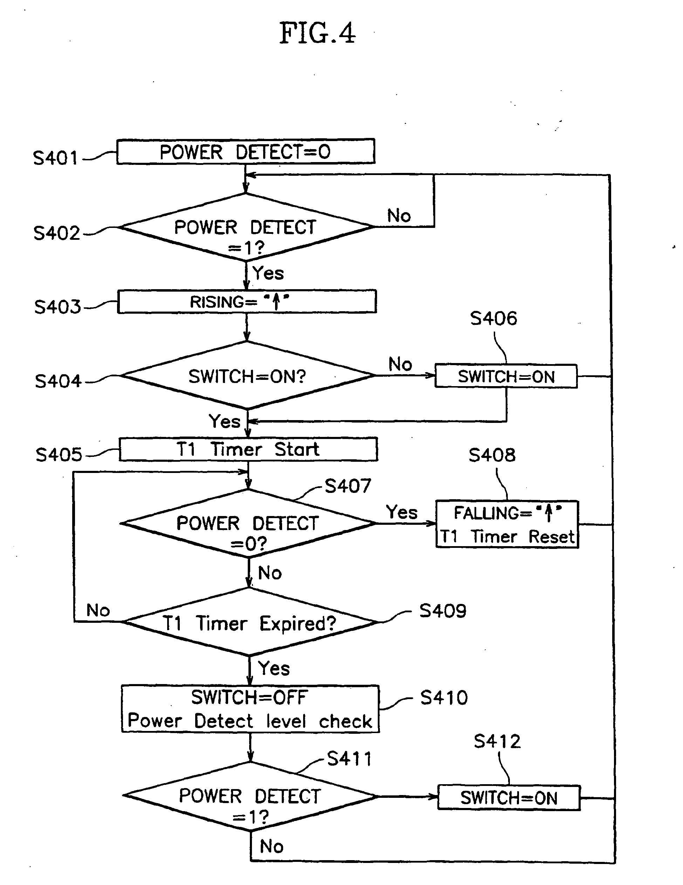

Now, a detailed description will be given as to an operation of the controller 200 with reference to FIGS. 3 and 4.

FIG. 3 is a timing diagram showing a logic flow in the controller 300.

First, the high level detector 220 of the controller 200 detects a high level component from the output of the second power amplifier 510 via a coupler 240, i.e., a highest access signal of the subscriber or an oscillation power level. The high level detector 220 detects the reverse access signal of the subscriber, a talking signal and an oscillation signal. If the detected level is above a predetermined reference value, i.e., in case of high-level detect, very high access signal or oscillation, the high level detector 220 generates a high-level power detect signal and a delayed detect signal DELAYED DETECT having the same power level as the power level detect signal. If the power detect signal POWER DETECT is 'high' and the delayed detect signal DELAYED DETECT is 'low', the high level detector 220 generates a rising signal RISING; and otherwise, the high level detector 220 generates a falling signal FALLING. The rising and falling signals RISING and FALLING are event triggers.

The high limit check circuit 215 of the detector check logic circuit 210 turns off the switch SW1 immediately after a predetermined time T1 from generation of the rising signal, and checks the level of the power detect signal POWER DETECT for a predetermined time T2 when the switch SW1 is off. If the power detect signal POWER DETECT has a high level detected during the time T2, the high limit check circuit 215 turns on the switch SW1. Otherwise, if the power detect signal POWER DETECT has a low level detected during the time T2, the switch SW1 is turned off. In a case where a falling signal FALLING is generated prior to the time T1 from generation of the rising signal RISING, the rising signal RISING is generated again and the switch SW1 is not turned off until the time T1. This is because the talking signal is continuously 'high' and hardly detected due to characteristic of the CDMA, with the oscillation signal continuously in a 'high' state. When the subscriber has an access with the switch SW1 off due to oscillation, the switch SW1 is turned on again. If the oscillation signal is detected repeatedly in this case, the system is completely down (in order to protect the base station transceiver system because repeated oscillation implies something wrong, in which case the switch SW1 is not ON even if the subscriber has access to). With the high level signal detected, it is possible to discriminate oscillation signal, terminal access signal and terminal talking signal.

This procedure may be implemented in a software manner. FIG. 4 is a flowchart explaining an operation for programming the procedure.

As shown in FIG. 4, the high limit check circuit 215 determines in step 402 whether the power detect signal S1 is converted from low level "0" (in step 401) to high level "1".

The high limit check circuit 215 generates a rising signal RISING and determines in step 404 whether the switch SW1 is ON. If the switch SW1 is OFF, the high limit check circuit 215 turns the switch SW1 on and activates the timer during a predetermined time T1, in step 405.

The high limit check circuit 215 determines in step 407 whether the power detect signal POWER DETECT is "0" after generation of the rising signal RISING, and if the power detect signal is "0", generates a falling signal RISING and resets the timer T1, in step 408.

When the timer T1 expires under the power detect signal POWER DETECT not being "0" after generation of the rising signal RISING, the high limit check circuit 215 turns the switch SW1 off and checks the level of the power detect signal POWER DETECT during a predetermined time T2 with the switch SW1 OFF, in step 410.

In other words, if the power detect signal POWER DETECT is at high level during the predetermined time T2, which implies non-oscillation, the high limit check circuit 215 turns the switch SW1 on, in step 412.

Otherwise, if the power detect signal POWER DETECT is at low level during the predetermined time T2, which implies oscillation, then the high limit check circuit 215 turns the switch SW1 off.

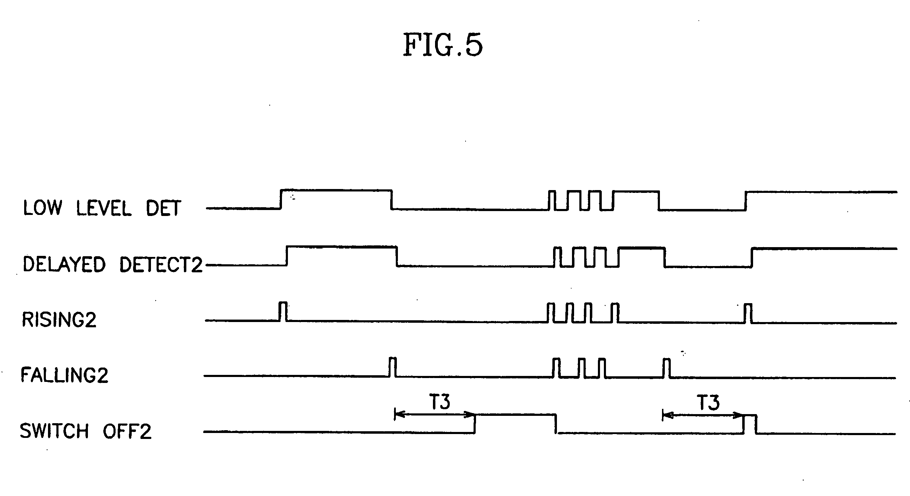

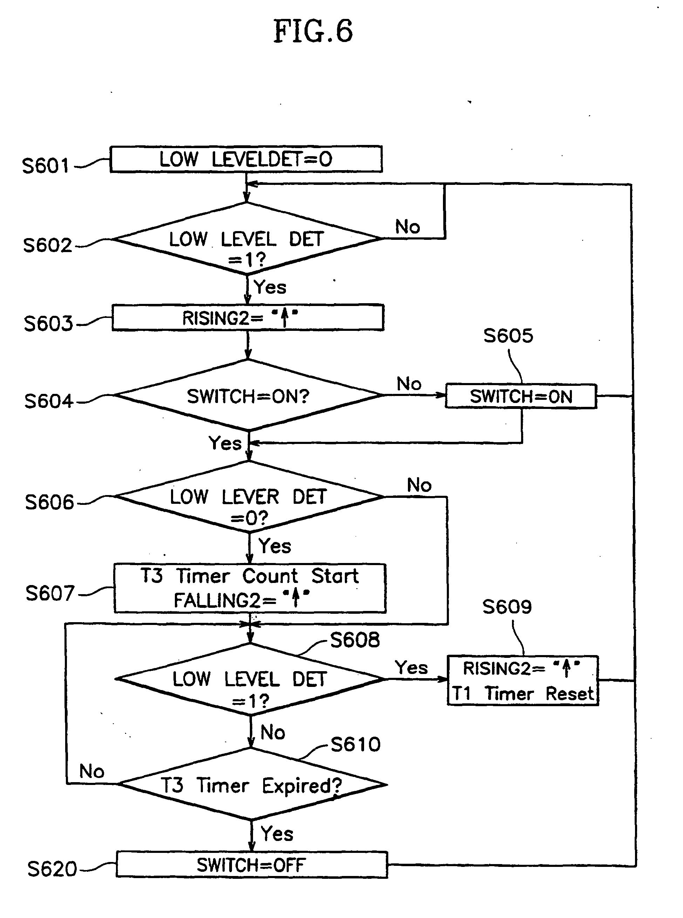

Now, a detailed description will be given as to an operation of the low limit check circuit 213 of the controller 200 with reference to FIGS. 5 and 6.

FIG. 5 is a timing diagram showing a logic flow in the low limit check circuit 213 of the controller 300.

First, the low level detector 230 of the controller 200 detects a low level component from the output of the second power amplifier 510 via the coupler 240, i.e., when no subscriber is connected. The output of the repeater system has an output level without an input signal, i.e., the output level = KTB + gain of the repeater system + noise factor of the repeater system. The low level detector 230 detects the reverse access signal of the subscriber, a talking signal and a non-signal output level. If the detected level is below a predetermined reference value, which implies that there is the non-signal output level without a reverse access signal of the subscriber nor a talking signal, the low level detector 230 turns the reverse output off to protect the reverse channel of the base station transceiver system. For this purpose, the low level detector 230 compares the detect signal being above a predetermine value to a delayed detect signal delayed detect2 to generate a rising signal RISING2 and a falling signal FALLING2, and after an elapse of a predetermined time T3 from generation of the falling signal FALLING2, turns the switch SW1 off.

Under the rising signal RISING2, the low level detector 230 turns the switch SW1 on. As such, the reverse output of the repeater system is disabled without a subscriber connection, so that reduction of the reverse capacity of the base station transceiver system due to the repeater system can be improved.

This procedure may be implemented in an either software or hardware manner. FIG. 6 is a flowchart explaining an operation for programming the procedure.

As shown in FIG. 6, the low limit check circuit 213 determines in step 602 whether the low level detect signal LOW LEVEL DETECT is converted from low level "0" (in step 601) to high level "1".

The low limit check circuit 213 generates a rising signal RISING2 and determines in step 604 whether the switch SW1 is ON. If the switch SW1 is OFF, the low limit check circuit 213 turns the switch SW1 on and determines in step 606 whether the low level detect signal LOW LEVEL DETECT is "0".

If the low level detect signal LOW LEVEL DETECT is "0", the low limit check circuit 213 generates a falling signal FALLING2 and activates a timer T3, in step 607.

The low limit check circuit 213 determines in step 608 whether the low level detect signal LOW LEVEL DETECT is "1" after generation of the falling signal FALLING2. If so, the low limit check circuit 213 generates a rising signal RISING2 and resets the timer, in step 609.

Otherwise, if the detect signal LOW LEVEL DETECT is not "1" after generation of the falling signal FALLING2 and the timer T3 expires in step 610, the low limit check circuit 213 turns the switch SW1 off immediately.

The present invention is not specifically limited to the PCS and may be applied to any general mobile communication system.

As described above, the embodiment of the present invention provides a repeater system and a control method thereof, in which the reverse output of the repeater system is disabled upon detection of a non-subscriber interval in the service area or a reverse oscillation so as to prevent a drop in the capacity of a base station transceiver system and protect a reception path.

While this invention has been described in connection with what is presently considered to be the most practical and preferred embodiment, it is to be understood that the invention is not limited to the disclosed embodiments, but, on the contrary, is intended to cover various modifications and equivalent arrangements included within the scope of the appended claims.

## Claims

1. A method for controlling a repeater system comprising:
a transmitter (100) arranged to:
- amplify data received from an external base station transceiver system,
- convert the amplified data to a service signal, and
- wirelessly send the service signal to a mobile station in a corresponding service area;
a receiver (500) arranged to amplify the signal received from the mobile station, and to output the amplified signal to the base station transceiver system; and
a controller (200), the controller comprising a high level detector (220), coupled to an output of the receiver (500), for detecting a high power level of the receiver (500);
a low level detector (230), coupled to the output of the receiver (500), for detecting a low power level of the receiver (500);
an integrated circuit (210) arranged to generate a control signal to prevent the output of the receiver (500) from being sent to the base station transceiver system when the power level detected by the high level detector (220) is above a first reference value during a first time period (T1), or when the power level detected by the low level detector (230) is below a second reference value during a second time period (T2); and
a switch (SW1) arranged to enable or disable transmission of the output signal of the receiver (500) to the base station transceiver system based on the control signal of the integrated circuit (210), the method for controlling the repeater system comprising the steps of:
- discriminating an oscillation signal of the repeater system, a talking signal and an access signal comprising the steps of:
■ detecting a high-level signal in the high level detector, whereby a power detect signal (POWER DETECT) and a delayed detect signal (DELAYED DETECT) are generated;
■ generating a rising signal (RISING) if the power detect signal (POWER DETECT) is "high" and the delayed detect signal (DELAYED DETECT) is "low";
■ if a rising signal (RISING) is generated, the switch (SW1) is turned on and a timer is activated during the predetermined first time period (T1), wherein when the timer for the predetermined first time period (T1) expires under the power detect signal (POWER DETECT) not being "low" after the rising signal (RISING) the switch (SW1) is turned off and the power detect signal (POWER DETECT) is checked during the predetermined second time period (T2) with the switch (SW1) off; and
■ determining a non-oscillation signal of the repeater system if the power detect signal (POWER DETECT) is at high level during the predetermined second time period (T2) and determining an oscillation signal of the repeater system if the power detect signal (POWER DETECT) is at low level during the predetermined second time period (T2);
- disabling the output of the receiver (500) of the repeater system when the power is in an oscillation state or when the power level detected by the low level detector (230) is below a predetermined value during a third time (T3); and
- enabling the output of the receiver (500) of the repeater system when the power is not in the oscillation state and the reverse output is an access or talking signal.

2. The method as claimed in claim 1, further comprising the steps of:
- determining whether the power has a minimum value when no subscriber exists during a predetermined time;
- disabling the output of the receiver (500) of the repeater system when the power maintains the minimum value; and
- maintaining the output of the receiver (500) of the repeater system using the access signal of the subscriber when the subscriber attempts to connect while the reverse output of the repeater system is disabled.

## Patentansprüche

1. Verfahren zum Steuern eines Relaissystems, welches Folgendes aufweist:
einen Sender bzw. Transmitter (100), der für Folgendes geeignet ist:
- Verstärken von von einem externen Basisstations-Transceiversystem empfangenen Daten;
- Konvertieren der verstärkten Daten in ein Servicesignal, und
- drahtloses Senden des Servicesignals an eine mobile Station in einem entsprechenden Servicebereich;
einen Empfänger (500), der dafür vorgesehen ist, das von der mobilen Station empfangene Signal zu verstärken und das verstärkte Signal zu dem Basisstations-Transceiversystem auszugeben; und
ein Steuergerät (200), wobei das Steuergerät einen Hochpegeldetektor (220) aufweist, der mit einem Ausgang des Empfängers (500) verbunden ist, zum Detektieren eines Hochleistungspegels des Empfängers (500);
einen Niedrigpegeldetektor (230), der mit einem Ausgang des Empfängers (500) verbunden ist, zum Detektieren eines Niedrigleistungspegels des Empfängers (500);
einen integrierten Schaltkreis (210), der dafür vorgesehen ist, ein Steuersignal zu erzeugen, um zu verhindern, dass der Ausgang des Empfängers (500) zu dem Basisstations-Transceiversystem gesendet wird, wenn der von dem Hochpegeldetektor (220) detektierte Leistungspegel während einer ersten Zeitdauer (T1) oberhalb eines ersten Referenzwerts liegt, oder wenn der durch den Niedrigpegeldetektor (230) detektierte Leistungspegel während einer zweiten Zeitdauer (T2) unterhalb eines zweiten Referenzwerts liegt; und
einen Schalter (SW1), der dafür vorgesehen ist, die Übertragung des Ausgangssignals des Empfängers (500) zu dem Basisstations-Transceiversystem basierend auf dem Steuersignal des integrierten Schaltkreises (210) freizugeben oder zu sperren, wobei das Verfahren zum Steuern des Relaissystems die folgenden Schritte aufweist:
- Unterscheiden eines Oszillationssignals des Relaissystems, eines Sprechsignals und eines Zugangssignals, welches die folgenden Schritte aufweist:
■ Ermitteln eines Hochpegelsignals in dem Hochpegeldetektor, wobei ein Leistungsermittlungssignal (LEISTUNGSERMITTLUNG) und ein verzögertes Ermittlungssignal (VERZÖGERTE ERMITTLUNG) erzeugt werden;
■ Erzeugen eines ansteigenden Signals (ANHEBEN), falls das Leistungsermittlungssignal (LEISTUNGSERMITTLUNG) "hoch" ist und das verzögerte Ermittlungssignal (VERZÖGERTE ERMITTLUNG) "niedrig" ist;
■ falls ein ansteigendes Signal (ANHEBEN) erzeugt wird, der Schalter (SW1) angeschaltet und ein Timer während der voreingestellten ersten Zeitdauer (T1) aktiviert wird, wobei wenn der Timer für die vorbestimmte erste Zeitdauer (T1), wenn das Leistungsermittlungssignal (LEISTUNGSERMITTLUNG) nicht "niedrig" ist, nach dem Anhebesignal (ANHEBEN) ausläuft, der Schalter (SW1) ausgeschaltet wird und das Leistungsermittlungssignal (LEISTUNGSERMITTLUNG) mit dem ausgeschalteten Schalter (SW1) während der voreingestellten zweiten Zeitdauer (T2) geprüft wird; und
■ Ermitteln eines Nicht-Oszillationssignals des Relaissystems, falls das Leistungsermittlungssignal (LEISTUNGSERMITTLUNG) sich während der voreingestellten zweiten Zeitdauer (T2) auf einem hohen Pegel befindet, und Ermitteln eines Oszillationssignals des Relaissystems, falls das Leistungsermittlungssignal (LEISTUNGSERMITTLUNG) während der voreingestellten zweiten Zeitdauer (T2) sich auf einem niedrigen Pegel befindet;
- Sperren des Ausgangs des Empfängers (500) des Relaissystems, wenn sich die Leistung in einem Oszillationszustand befindet oder wenn das durch den Niedrigpegeldetektor (230) ermittelte Leistungsniveau während einer dritten Zeit (T3) unterhalb eines voreingestellten Werts befindet; und
- Freigeben des Ausgangs des Empfängers (500) des Relaissystems, wenn sich die Leistung nicht in dem Oszillationszustand befindet und die invertierte Ausgabe ein Zugangs- oder Sprechsignal ist.

2. Verfahren nach Anspruch 1, welches des weiteren die folgenden Schritte aufweist:
- Ermitteln, ob die Leistung einen Minimalwert aufweist, wenn während einer bestimmten Zeit kein Teilnehmer existiert;
- Sperren des Ausgangs des Empfängers (500) des Relaissystems, wenn die Leistung auf dem minimalen Wert bleibt; und
- Beibehalten des Ausgangs des Empfängers (500) des Relaissystems unter Verwendung des Zugangssignals des Teilnehmers, wenn der Teilnehmer versucht, eine Verbindung herzustellen, während die invertierte Ausgabe des Relaissystems gesperrt ist.

## Revendications

1. Procédé pour contrôler un système répéteur comprenant :
un émetteur (100) agencé pour :
- amplifier des données reçues d'un système externe d'émetteurs-récepteurs de stations de base,
- convertir les données amplifiées en un signal de service, et
- envoyer sans-fil le signal de service à une station mobile dans une zone de service correspondante ;
un récepteur (500) agencé pour amplifier le signal reçu de la station mobile et pour émettre le signal amplifié vers le système d'émetteurs-récepteurs de stations de base ; et
un contrôleur (200), le contrôleur comprenant un détecteur de niveau haut (220) couplé à une sortie du récepteur (500), pour détecter un niveau de forte puissance du récepteur (500) ;
un détecteur de niveau bas (230) couplé à la sortie du récepteur (500), pour détecter un niveau de faible puissance du récepteur (500) ;
un circuit intégré (210) agencé pour générer un signal de contrôle pour empêcher la sortie du récepteur (500) d'être émise vers le système d'émetteurs-récepteurs de stations de base lorsque le niveau de puissance détecté par le détecteur de niveau haut (220) est supérieur à une première valeur de référence pendant une première période de temps (T1), ou lorsque le niveau de puissance détecté par le détecteur de niveau bas (230) est inférieur à une seconde valeur de référence pendant une deuxième période de temps (T2) ; et
un commutateur (SW1) agencé pour valider ou invalider la transmission du signal de sortie du récepteur (500) vers le système d'émetteurs-récepteurs de stations de base sur la base du signal de contrôle du circuit intégré (210), le procédé pour contrôler le système répéteur comprenant les étapes de :
- distinction entre un signal oscillant du système répéteur, un signal de voix et un signal d'accès, comprenant les étapes de :
• détection d'un signal de niveau haut dans le détecteur de niveau haut, dans laquelle on génère un signal de détection de puissance (DETECTION DE PUISSANCE) et un signal de détection retardée (DETECTION RETARDÉE) ;
• génération d'un signal montant (MONTANT) si le signal de détection de puissance (DETECTION DE PUISSANCE) est "haut" et le signal de détection retardée (DETECTION RETARDÉE) est "bas";
• si un signal montant (MONTANT) est généré, le commutateur (SW1) est activé et un temporisateur est activé pendant une première période de temps prédéfinie (T1) de telle manière que lorsque le temporisateur pour la première période de temps prédéfinie (T1) se termine alors que le signal de détection de puissance (DETECTION DE PUISSANCE) n'est pas "bas" après le signal montant (MONTANT), le commutateur (SW1) est désactivé et le signal de détection de puissance (DETECTION DE PUISSANCE) est vérifié pendant une deuxième période de temps prédéfinie (T2), le commutateur (SW1) étant désactivé ; et
• identification d'un signal non oscillant du système répéteur si le signal de détection de puissance (DETECTION DE PUISSANCE) est à un niveau haut pendant la deuxième période de temps prédéfinie (T2) et identification d'un signal oscillant du système répéteur si le signal de détection de puissance (DETECTION DE PUISSANCE) est à un niveau bas pendant la deuxième période de temps prédéfinie (T2) ;
- invalidation de la sortie du récepteur (500) du système répéteur lorsque la puissance est en état d'oscillation ou lorsque le niveau de puissance détecté par le détecteur de niveau bas (230) est inférieur à une valeur prédéfinie pendant une troisième période de temps (T3) ; et
- validation de la sortie du récepteur (500) du système répéteur lorsque la puissance n'est pas en état d'oscillation et la sortie inverse est un signal d'accès ou de voix.

2. Procédé selon la revendication 1 comprenant en outre les étapes de :
- détermination que la puissance a une valeur minimum lorsqu'il n'y a pas d'abonné pendant un temps prédéfini ;
- invalidation de la sortie du récepteur (500) du système répéteur lorsque la puissance reste à la valeur minimum ; et
- entretien de la sortie du récepteur (500) du système répéteur en utilisant le signal d'accès de l'abonné lorsque l'abonné essaie de se connecter pendant que la sortie inverse du système répéteur est invalidée.
